# EUROPEAN PATENT SPECIFICATION

(11) **EP 4 439 313 B1**
(45) Date of publication and mention of the grant of the patent: **14.01.2026**
(21) Application number: 24165015.9
(22) Date of filing: 21.03.2024
(51) Int. Cl.: G06F 12/084, G06F 12/0842, G06F 12/0875, G06F 12/0895

(54) **RESOURCE MANAGEMENT**
RESSOURCENVERWALTUNG
GESTION DE RESSOURCES

(30) Priority: 29.03.2023 GB 202304585
(43) Date of publication of application: 02.10.2024
(73) Proprietor: Imagination Technologies Limited, Kings Langley, Hertfordshire WD4 8LZ (GB)
(72) Inventor: KING, Ian, Kings Langley, Hertfordshire, WD4 8LZ (GB)
(74) Representative: CMS Cameron McKenna Nabarro Olswang LLP

(56) References cited:
- US-A1- 2019 087 188

## Description

### CROSS-REFERENCE TO RELATED APPLICATION

### TECHNICAL FIELD

The invention relates to management of resources, and in particular shared registers, in a graphics processing unit (GPU).

### BACKGROUND

Within a GPU there is a finite pool of resources, such as registers, and increasing the available resources in a GPU (e.g. by adding more registers) results in an increase in the size of the GPU. Various techniques are used to optimise the use of the registers including designating some registers as shared registers and others as local registers. Shared registers can then be used to store values that are accessible by several tasks, whereas local registers are accessible only by the task to which they have been allocated.

US2019087188 A1 discloses managing shared register allocations in a GPU.

The embodiments described below are provided by way of example only and are not limiting of implementations which solve any or all of the disadvantages of known methods of managing shared register allocations.

### SUMMARY

The invention is set out in the appended set of claims. The dependent claims set out particular embodiments.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of managing shared register allocations in a GPU is described. The method comprises, in response to receiving an allocating task, searching a shared register allocation cache for a cache entry with a cache index that identifies a secondary program that is associated with the allocating task. In response to identifying a cache entry with a cache index that identifies the secondary program that is associated with the allocating task, the method returns an identifier of the cache entry and status information indicating a cache hit. Returning the identifier of the cache entry causes the identifier of the cache entry to be associated with the allocating task and returning the status information indicating a cache hit causes the allocating task not to be issued.

A first aspect provides a method of managing shared register allocations in a GPU, the method comprising: in response to receiving an allocating task, wherein the allocating task is associated with a secondary program: searching a shared register allocation cache for a cache entry with a cache index that identifies the secondary program that is associated with the allocating task; and in response to identifying a cache entry with a cache index that identifies the secondary program that is associated with the allocating task, returning an identifier of the cache entry and status information indicating a cache hit, wherein returning the identifier of the cache entry causes the identifier of the cache entry to be associated with the allocating task and returning the status information indicating a cache hit causes the allocating task not to be issued.

Searching a shared register allocation cache for a cache entry with a cache index that identifies the secondary program that is associated with the allocating task may comprise: searching a shared register allocation cache for a cache entry with a cache index with a matching data address for the secondary program.

The allocating task may be associated with both the secondary program and a master unit identifier and wherein searching a shared register allocation cache for a cache entry with a cache index that identifies the secondary program that is associated with the allocating task comprises: searching a shared register allocation cache for a cache entry with a cache index with both a matching data address for the secondary program and a matching master unit identifier.

The method may further comprise, in response to determining that no cache entry has a cache index that identifies the secondary program that is associated with the allocating task, allocating shared registers to the allocating task and assigning a cache entry to record the allocation, and returning an identifier of the cache entry recording the allocation and status information indicating a cache miss, wherein returning the identifier of the cache entry causes the identifier of the cache entry to be associated with the allocating task and returning the status information indicating a cache miss causes the allocating task to be issued.

Allocating shared registers to the allocating task and updating a cache entry to record the allocation may comprise: searching for available shared registers for allocation to the allocating task; in response to identifying available shared registers, allocating the shared registers and assigning the cache entry to record the allocation; and in response to not identifying available shared registers for allocation to the allocating task, identifying an eligible cache entry in the shared register allocation cache for eviction, evicting the eligible cache entry and freeing shared registers identified in the eligible cache entry before repeating the search for available shared registers for allocation to the allocating task.

The method may further comprise, in response to determining that no cache entry has a cache index that identifies the secondary program that is associated with the allocating task, incrementing a counter for the identifier of the cache entry recording the allocation; in response to receiving a referencing task, wherein the referencing task is associated with an allocating task, incrementing a counter for the identifier of the cache entry associated with the allocating task; in response to an allocating task terminating, decrementing a counter for the identifier of the cache entry associated with the allocating task; and in response to a referencing task terminating, wherein the referencing task is associated with an allocating task, decrementing a counter for the identifier of the cache entry associated with the allocating task, wherein a cache entry in the shared register allocation cache is only eligible for eviction if the counter for the identifier of the cache entry is zero.

The method may further comprise, locking the cache entry having the identifier that is returned; and in response to receiving a referencing task, wherein the referencing task is associated with an allocating task, unlocking the cache entry having an identifier that is associated with the allocating task, wherein a cache entry in the shared register allocation cache is only eligible for eviction if the cache entry is not locked.

In response to an allocating task terminating, shared resources identified in a cache entry having an identifier that is associated with the allocating task may remain valid.

Each cache entry in the shared register allocation cache may have an identifier and comprise: a valid bit and a cache index (and an allocation base, wherein the valid bit indicates whether the cache entry is valid and the cache index comprises a data address for a secondary program.

Each cache entry may further comprise a master unit identifier.

Each cache entry may further comprise an allocation base, wherein the allocation base specifies a base memory address of a shared register allocation recorded by the cache entry.

A second aspect provides a method of operating a GPU, the method comprising: receiving an allocating task; determining an eviction mode associated with the allocating task; in response to determining that the eviction mode associated with the allocating task is a first eviction mode, managing shared register allocations according to the method of the first aspect; and in response to determining that the eviction mode associated with the allocating task is a second eviction mode: setting a closed bit in an entry in the shared register allocation cache for any previous allocation for a master unit associated with the allocating task; in response to determining that a counter for the identifier for the entry in the shared register allocation cache for any previous allocation for a master unit associated with the allocating task is zero, evicting the eligible cache entry and freeing shared registers identified in the eligible cache entry; searching for available shared registers for allocation to the allocating task; in response to not identifying available shared registers for allocation to the allocating task, identifying an eligible cache entry in the shared register allocation cache for eviction, evicting the eligible cache entry and freeing shared registers identified in the eligible cache entry before repeating the search for available shared registers for allocation to the allocating task; in response to identifying available shared registers, allocating the shared registers and assigning the cache entry to record the allocation; and returning an identifier of the cache entry recording the allocation and status information indicating a cache miss, wherein returning the identifier of the cache entry causes the identifier of the cache entry to be associated with the allocating task and returning the status information indicating a cache miss causes the allocating task to be issued.

A third aspect provides a shared register allocation cache for a GPU comprising a shared register resource manager and a plurality of cache entries, wherein the shared register resource manager is arranged, in response to receiving an allocating task, to: search for a cache entry with a cache index that identifies a secondary program that is associated with the allocating task; and in response to identifying a cache entry with a cache index that identifies the secondary program that is associated with the allocating task, return an identifier of the cache entry and status information indicating a cache hit, wherein returning the identifier of the cache entry causes the identifier of the cache entry to be associated with the allocating task and returning the status information indicating a cache hit causes the allocating task not to be issued.

Searching a shared register allocation cache for a cache entry with a cache index that identifies the secondary program that is associated with the allocating task may comprise: searching a shared register allocation cache for a cache entry with a cache index with a matching data address for the secondary program.

Searching a shared register allocation cache for a cache entry with a cache index that identifies the secondary program that is associated with the allocating task may comprise: searching a shared register allocation cache for a cache entry with a cache index with both a matching data address for the secondary program and a matching master unit identifier.

The shared register resource manager may be arranged, in response to determining that no cache entry has a cache index that identifies the secondary program that is associated with the allocating task, to: allocate shared registers to the allocating task and assign a cache entry to record the allocation, and return an identifier of the cache entry recording the allocation and status information indicating a cache miss, wherein returning the identifier of the cache entry causes the identifier of the cache entry to be associated with the allocating task and returning the status information indicating a cache miss causes the allocating task to be issued.

The shared register allocation cache may further comprise eviction logic, wherein allocating shared registers to the allocating task and updating a cache entry to record the allocation comprises: searching for available shared registers for allocation to the allocating task; and in response to identifying available shared registers, allocating the shared registers and assigning the cache entry to record the allocation; and in response to the shared register resource manager not identifying available shared registers for allocation to the allocating task, to: trigger the eviction logic to identify an eligible cache entry in the shared register allocation cache for eviction and evict the eligible cache entry and free shared registers identified in the eligible cache entry; and afterwards, repeat the search for available shared registers for allocation to the allocating task.

The shared register allocation cache may further comprise counter logic and wherein the counter logic is arranged: in response to the shared register resource manager determining that no cache entry has a cache index that identifies the secondary program that is associated with the allocating task, to increment a counter for the identifier of the cache entry recording the allocation; in response to the shared register resource manager receiving a referencing task, wherein the referencing task is associated with an allocating task, to increment a counter for the identifier of the cache entry associated with the allocating task; in response to an allocating task terminating, to decrement a counter for the identifier of the cache entry associated with the allocating task; and in response to a referencing task terminating, wherein the referencing task is associated with an allocating task, to decrement a counter for the identifier of the cache entry associated with the allocating task, wherein a cache entry in the shared register allocation cache is only eligible for eviction if the counter for the identifier of the cache entry is zero.

The shared register resource manager may be further arranged to: lock the cache entry having the identifier that is returned; and in response to receiving a referencing task, wherein the referencing task is associated with an allocating task, unlock the cache entry having an identifier that is associated with the allocating task, wherein a cache entry in the shared register allocation cache is only eligible for eviction if the cache entry is not locked.

In response to an allocating task terminating, shared resources identified in a cache entry having an identifier that is associated with the allocating task may remain valid.

Each cache entry in the shared register allocation cache may have an identifier and comprises: a valid bit and a cache index and an allocation base, wherein the valid bit indicates whether the cache entry is valid and the cache index comprises a data address for a secondary program.

Each cache entry may further comprise a master unit identifier.

Each cache entry may further comprise an allocation base, wherein the allocation base specifies a base memory address of a shared register allocation recorded by the cache entry.

A fourth aspect provides a GPU comprising the shared register allocation cache according to the third aspect or configured to perform the method of the first aspect.

The GPU may be embodied in hardware on an integrated circuit. There may be provided a method of manufacturing, at an integrated circuit manufacturing system, a GPU. There may be provided an integrated circuit definition dataset that, when processed in an integrated circuit manufacturing system, configures the system to manufacture a GPU. There may be provided a non-transitory computer readable storage medium having stored thereon a computer readable description of a GPU that, when processed in an integrated circuit manufacturing system, causes the integrated circuit manufacturing system to manufacture an integrated circuit embodying a GPU.

There may be provided an integrated circuit manufacturing system comprising: a non-transitory computer readable storage medium having stored thereon a computer readable description of the GPU; a layout processing system configured to process the computer readable description so as to generate a circuit layout description of an integrated circuit embodying the GPU; and an integrated circuit generation system configured to manufacture the GPU according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a flow diagram of a first example method of managing shared register allocations in a GPU;
Figure 2 shows a flow diagram of an implementation one of the operations in the method of Figure 1, 3 or 6 in more detail;
Figure 3 shows a flow diagram of a second example method of managing shared register allocations in a GPU;
Figure 4 shows a flow diagram of a first method of updating a counter that may be used with the method of Figure 3 or 8;
Figure 5 shows a flow diagram of a second method of updating a counter that may be used with the method of Figure 3, 6 or 8;
Figure 6 shows a flow diagram of a third example method of managing shared register allocations in a GPU;
Figure 7 shows a flow diagram of a third method of updating a counter that may be used with the method of Figure 6 or 8;
Figure 8 shows a flow diagram of a fourth example method of managing shared register allocations in a GPU;
Figure 9 shows a schematic diagram of a GPU that implements the methods of any of Figures 1-8;
Figure 10 is a schematic diagram showing the contents of an example cache entry;
Figure 11 shows a computer system in which a GPU is implemented; and
Figure 12 shows an integrated circuit manufacturing system for generating an integrated circuit embodying a GPU.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

A secondary program, which may also be referred to as a constant calculation program or shared program, may be used to implement constant (or uniform) expressions within a GPU and the results may be stored in shared registers within the GPU. This means that the results can be used by several tasks instead of being calculated afresh for each task and this reduces the processing load on the GPU. However, there is a finite pool of shared registers and this can impact the performance of the GPU.

Shared registers may be allocated prior to the issuance of the secondary program and then the results are written to the allocated shared registers when the secondary program is run. Once the last task that references the particular allocation is issued the allocation is marked as closed and then when that last task that references the particular allocation is complete, the shared registers are freed. This invalidates any data stored in the shared registers and enables the shared registers to be subsequently reallocated (e.g. to a different secondary program). Under this process, the closing of the allocation and the subsequent freeing of the allocation are separate events resulting from different triggers (where both triggers relate to the same task, i.e. the last task that references a particular allocation of shared registers).

For tile-based GPU-architectures, the secondary program may be invoked for every tile that a draw call touches even though it is the same secondary program generating the same outputs for every tile. This results in redundant work (as a consequence of repeatedly running the secondary program) but simplifies the resource tracking (e.g. the tracking of the shared register allocations). The finite pool of shared registers also limits the number of tiles that can be in flight within a pipeline at any time because there is a separate allocation of shared registers for each tile and so the number of tiles in flight need to be tracked (e.g. by a driver). For programs (e.g. shaders) which require a large number of shared registers, the number of tiles in flight either needs to be reduced (e.g. by the driver) or a limit needs to be imposed on the number of shared registers which can be statically loaded, with a fallback to dynamically loading the registers in the main program (e.g. the main shader). Neither of these situations is desirable as it can reduce performance.

Where ray tracing is used, the secondary program may be invoked whenever the state changes. This again may mean that the same secondary program is run several times when ray tasks are resumed given that it is not known which objects in a scene the rays will hit.

Described herein are improved methods of managing shared register allocations in a GPU that use a cache to manage the allocation of the shared registers. This cache may be referred to as the shared register allocation cache. The shared register allocation cache does not replace the shared registers or store the data generated by the secondary program that would otherwise be stored in the shared registers, but instead the cache stores records of how the shared registers are allocated. The methods described herein provide performance improvements as a consequence of reducing the number of times that a secondary program is run and the number of times that the same values are loaded into the shared registers.

As described below, in a first mode of operation, shared register allocations are not freed immediately once all tasks referencing the allocation complete (e.g. shared register allocations are not freed when the fragment shaders of a draw call finish, per-tile, or when the ray shaders of an acceleration structure search iteration finish) but instead remain valid (which may also be referred to as remaining pending). An identifier (ID), which may be referred to as a shared ID, and which is stored in the shared register allocation cache, enables reuse of data stored in previously allocated shared registers by, for example, different tiles or when a ray task is resumed. In some examples, there may also be a second mode of operation in which the shared register allocations are freed straight away and the method may switch between modes of operation dependent upon the identity of the hardware unit (which may be referred to as the master unit) that fed the particular data (e.g. the data related to the per-instance shader invocation which will vary per shader type) into the particular GPU pipeline. Within a GPU there may be different types of master unit, for example a GPU may comprise one or more of the following: a vertex master unit, a domain master unit, a compute master unit, a 2D master unit, a pixel master unit (which may also be referred to as a fragment master unit or 3D master unit) and a ray master unit.

Tasks are described herein as allocating tasks or referencing tasks. An allocating task is a task that updates the state and may also be referred to as a state update task. An allocating task triggers a new allocation of shared registers for the allocating task and then runs the secondary program, which generates data that is written to the newly allocated shared registers. A referencing task is a task that uses the data stored in the allocated shared registers. Coefficient tasks and work tasks are examples of referencing tasks and there may be one or more referencing tasks associated with each allocating task (i.e. there may be one or more referencing tasks which use the data stored in the shared registers that are allocated and populated as a consequence of the allocating task). It will be appreciated that there may be other types of tasks in addition to allocating and referencing tasks, such as housekeeping tasks.

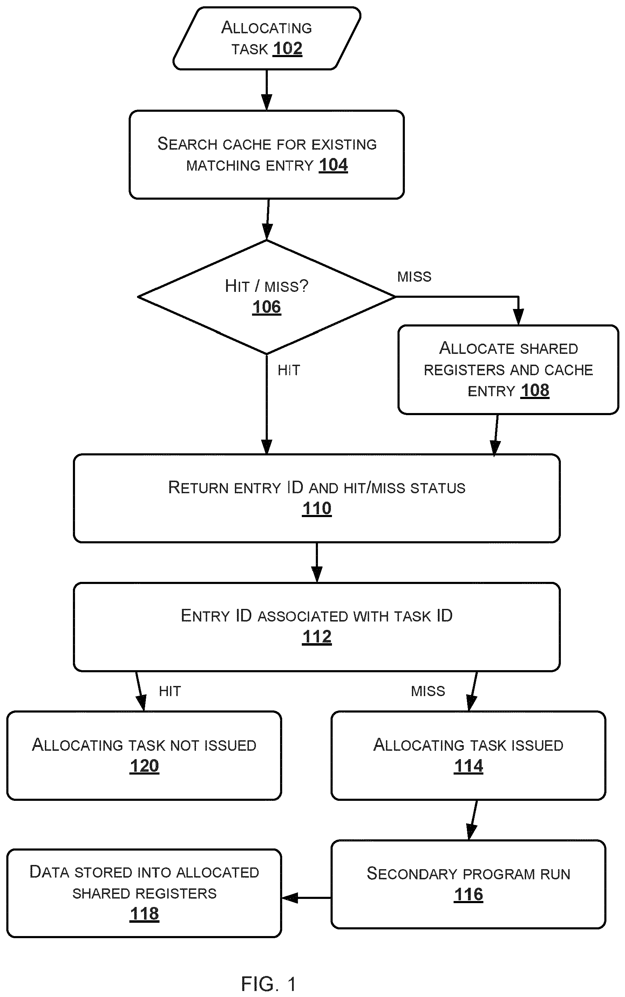

A first example method of managing shared register allocations in a GPU can be described with reference to Figure 1. As shown in Figure 1, in response to receiving an allocating task (block 102), the shared register allocation cache is searched to determine whether a matching entry exists (block 104). To determine whether a matching entry exists, the cache is searched to look for a cache entry with a cache index or tag that uniquely identifies the secondary program that is triggered by the execution of the allocating task. A matching entry results in a cache hit and if there is no matching entry, this is a cache miss.

The cache index or tag that uniquely identifies the secondary program that is triggered by the execution of the allocating task may comprise a combination of the data address for the secondary program that is triggered by the execution of the allocating task and the identifier (ID) for the master unit that created the allocating task. The data address is the memory address where the data upon which the secondary program executes is stored and is different from the code address for the secondary program which is the memory address where the secondary program is stored. The data address for the secondary program may be specified within the allocating task or associated state information. These memory addresses may be virtual addresses. Where the combination of the data address and the master unit is used as the cache index or tag, searching the allocation cache to determine whether a matching entry exists (in block 104) comprises searching the allocation cache to look for a cache entry with both a matching data address for the secondary program that is triggered by the execution of the allocating task and a matching master unit ID.

In the event of a cache miss ('Miss' in block 106), shared registers are allocated to the allocating task and the allocation is recorded in an available cache entry (block 108). This cache entry has an identifier which may be referred to as the entry ID or shared ID. The entry ID is returned along with status data (which may be referred to as the hit/miss status) identifying that a cache miss occurred (block 110). In the event of a cache hit ('Hit' in block 106), no shared registers are allocated and no cache entry is updated (i.e. block 108 is omitted) and the entry ID of the matching entry is returned along with status data identifying that a cache hit occurred (block 110).

As shown in Figure 1, irrespective of whether there is a cache miss or a cache hit, an entry ID is returned along with the hit/miss status (block 110). This causes the entry ID to be associated with the identifier of the allocating task, referred to as the task ID (block 112). Furthermore, if the hit/miss status indicates a cache miss, this causes the allocating task to be issued (block 114) and as a consequence the secondary program is run (block 116) and the shared registers are populated with data generated by the secondary program (block 118). Although the issuing of the task (in block 114) and the running of the task (in block 116) are presented here as separate steps, in some architectures the allocation of the task and the running of the secondary program may be part of the same operation (i.e. allocating the task may amount to running the secondary program). When the secondary program is run (in block 116), the entry ID, which has been associated with the task ID for the allocating task, is used to query the shared register allocation cache and identify the shared register allocation for that task so that the data generated by the secondary program is stored in the correct shared registers (in block 118). If, however, the hit/miss status indicates a cache hit, this causes the allocating task not to be issued (block 120) and as a consequence the secondary program is not run (i.e. blocks 116-118 are omitted).

Subsequently, when a referencing task is received, the entry ID that is associated with the task ID for the corresponding allocating task, is used to query the shared register allocation cache and identify the shared register allocation for that task so that the stored data (as generated by the secondary program) can be accessed and used.

Where the methods described herein are not used, when a last task referencing a particular shared register allocation terminates, the shared registers in the allocation (which has already been marked as closed) are freed (as described above). In the context of the method of Figure 1, this would correspond to the last task referencing an allocating task with a particular entry ID, since multiple allocating tasks may be associated with the same entry ID. However, when using the method of Figure 1, this freeing of shared registers is not triggered by the termination of the last referencing task. Instead, when the last referencing task terminates, the shared registers remain allocated and are not freed. Instead, an eviction policy may be used that determines when shared registers are allocated. According to an example eviction policy, shared registers are freed in response to determining both that (i) there are insufficient available shared registers to perform an allocation (e.g. in block 108) and that (ii) all referencing tasks that reference the particular shared registers have terminated. Examples of eviction policies are described in more detail below.

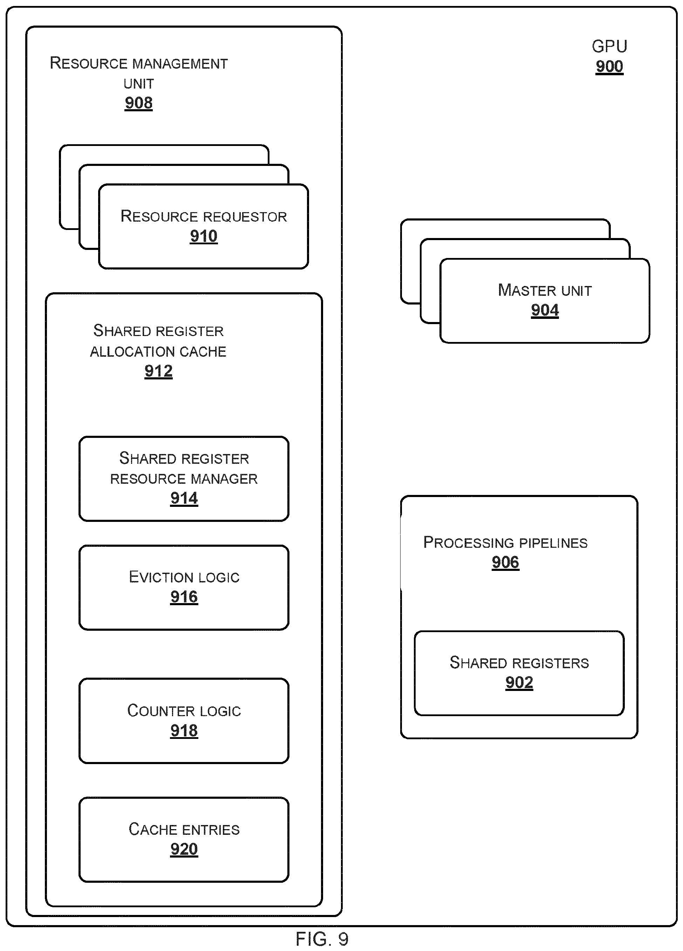

By using the method of Figure 1, the number of times that a secondary program is run is reduced. If the data that would be generated by the secondary program is already stored in shared registers (as determined by searching the shared register allocation cache, rather than searching the stored registers themselves), then the secondary program is not run. As the shared registers are not freed when the last task referencing them terminates, this means that a subsequent allocating task with a matching data address for the secondary program and with a matching master unit identifier (ID) will be allocated the same entry ID and the secondary program will not be run. As described above, it is the shared register allocation cache that is searched, and not the stored registers themselves. The stored registers are not easily searchable because the data in each shared register allocation could comprise very large numbers of values (e.g. hundreds of values) and the data is held remotely from where the check (in block 104) is performed (e.g. as shown in Figure 9 and described below).

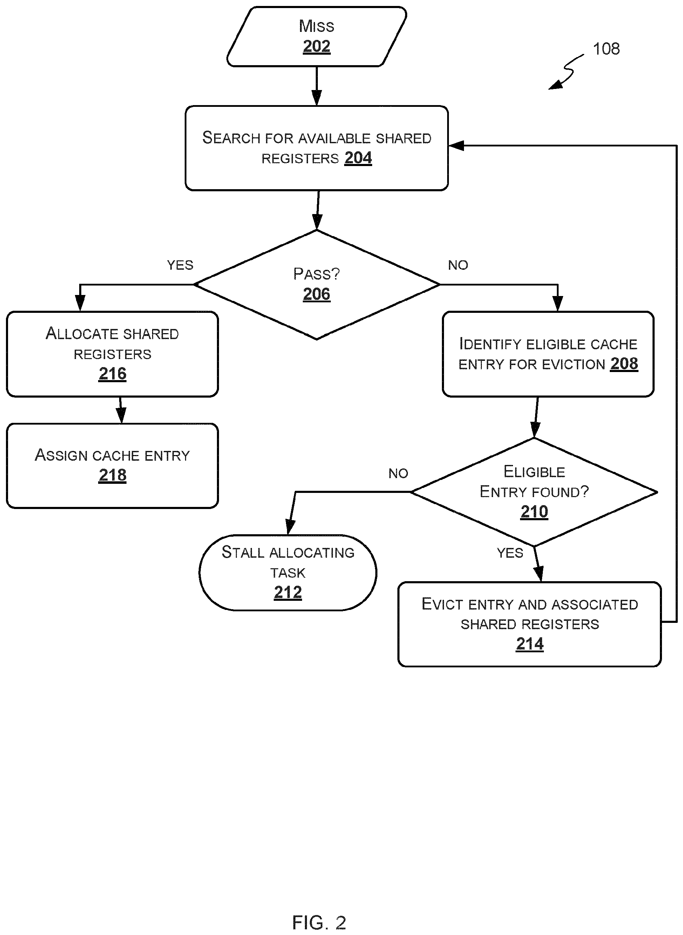

The description of Figure 1 above assumes that in the event of a cache miss, there are sufficient shared registers that are currently unallocated and hence are available to be allocated to the received allocating task (in block 108). In various examples, the allocation of shared registers and updating of the cache entry (in block 108) may be implemented as shown in Figure 2.

As shown in Figure 2, in response to a cache miss (block 202), a search is performed to identify available shared registers (block 204). This search (in block 204) is performed over the entire shared register space. It is then determined whether sufficient available shared registers have been identified or not (block 206). If there are insufficient available shared registers ('No' in block 206), a search is performed to identify an eligible cache entry for eviction (block 208). When performing this search, a predefined eviction policy is used to define whether a cache entry is eligible for eviction or not. As described above, according to an example eviction policy, a cache entry may be considered eligible for eviction if all referencing tasks that reference the shared registers allocated by the cache entry have terminated. If no eligible entry is found ('No' in block 210), then the progression of the allocating task (as received in block 102) is stalled (block 212) and instead another allocating request is considered, when received. If an eligible entry is found ('Yes' in block 210), then the entry is evicted and the associated shared registers (i.e. those shared registers that are allocated by the entry) are freed (block 214). The method then repeats the search to identify available shared registers (in block 204). It may be that multiple iterations that evict cache entries (in block 214) are performed before the test for available shared register passes (in block 206). The allocating task is only stalled (in block 212) if it is not possible to free up sufficient shared registers.

If there are sufficient available shared registers ('Yes' in block 206), either initially or after eviction of one or more entries (in block 214), then the shared registers are allocated to the allocating task (block 216) and a cache entry is assigned to record the allocation (block 218).

When using the eviction policy described above, an allocating task associated with one master unit may evict a cache entry associated with the same master unit or a different master unit since master unit is not a criteria specified in the eviction policy. In a variation on the eviction policy described above, each cache entry includes an indication of the master unit that it is associated with (i.e. the master unit of the allocating task that triggered the assigning of the cache entry) and when identifying an eligible cache entry for eviction (in block 208), cache entries associated with the same master unit as the current allocating task are prioritised over cache entries associated with different master units. In such examples more than one search may be performed in parallel (in block 208), e.g. a first search for an eligible entry for the master unit associated with the current allocating task and a second search for an eligible entry for any master unit, and then the result of one of the searches may be identified for eviction based on other criteria defined in the eviction policy.

Other criteria may also be specified as part of the eviction policy such as least-recentlyused (LRU) or age-based criteria (e.g. oldest first). In some examples, the eviction policy may specify a combination of master unit and other criteria in the form of an order of preference for eviction, e.g. such that for an allocating task associated with a first master unit (e.g. a fragment master unit), a LRU / oldest cache entry for the same master unit is preferred for eviction over an entry associated with a second master unit (e.g. a ray master unit) even if the second master unit has an entry with an older LRU count or age.

Where the eviction policy allows an allocating task associated with one master unit to evict a cache entry associated with a different master unit, this prevents one master unit from permanently consuming the majority of the shared register allocation and blocking other master units. In various examples, the eviction policy may allow this for any master units which are configured in transient eviction mode (as described below).

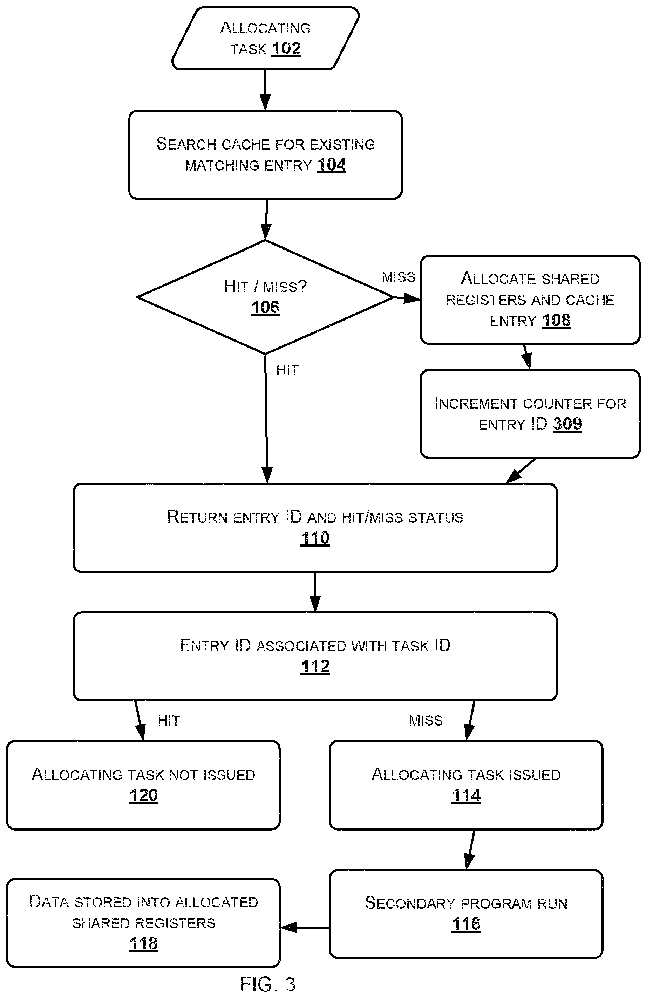

A second example method of managing shared register allocations in a GPU can be described with reference to Figures 3-5. This method is a variation on that shown in Figure 1 and described above. As shown in Figure 3, in response to receiving an allocating task (block 102), the method proceeds in the same way as shown in Figure 1 and described above, except that, in the event of a cache miss ('Miss' in block 106), as well as allocating shared registers and recording the allocation in an available cache entry (block 108, e.g. as also shown in Figure 2), a counter is incremented (block 309). The counter that is incremented (in block 309) is the counter that is associated with the entry ID of the entry that was updated to record the allocation (in block 108). This counter is then used as part of the eviction policy (e.g. in block 208 of Figure 2) in the event that, when a subsequent allocating task is received, there are insufficient available shared registers to perform the allocation (in block 108). This eviction policy is described in more detail below.

As shown in Figure 1, irrespective of whether there is a cache miss or a cache hit, an entry ID is returned along with the hit/miss status (block 112). If the hit/miss status indicates a cache miss, this causes the allocating task to be issued (block 114) and as a consequence the secondary program is run. If, however, the hit/miss status indicates a cache hit, this causes the allocating task not to be issued (block 120) and as a consequence the secondary program is not run.

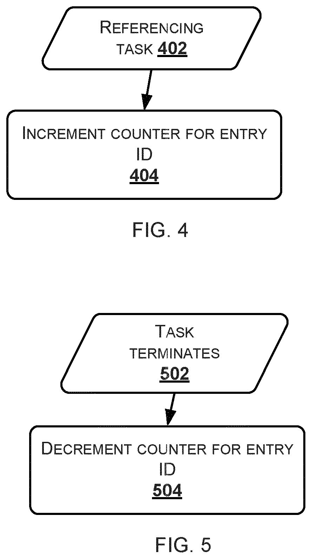

As described above with reference to Figure 1, subsequently, when a referencing task is received, the entry ID that is associated with the task ID for the corresponding allocating task, is used to query the shared register allocation cache and identify the shared register allocation for that task so that the stored data (as generated by the secondary program) can be accessed and used. Additionally, in response to receiving the referencing task (block 402), and irrespective of whether there was a cache hit or a cache miss when the allocating task was received, the counter for the entry ID that is associated with the task ID for the corresponding allocating task is incremented (block 404), as shown in Figure 4.

Figure 5 shows what happens when a task terminates, where this task may be the allocating task (in situations where it is issued in block 114) or a referencing task. In response to a task terminating (block 502), the counter for the entry ID that is associated with the task ID for the corresponding allocating task is decremented (block 504).

Using the methods of Figures 3-5, the counter for a particular entry ID may decrease to zero when a last task referencing a particular shared register allocation terminates, and then, because the shared registers are not freed and instead remain allocated, the counter for the particular entry ID may subsequently increase (in block 309 and then again in block 404) in response to receiving a subsequent allocating task with a data address for the secondary program that matches that stored in the cache entry and with a matching master unit identifier (ID) that matches that stored in the cache entry.

Where the methods of Figures 3-5 are used, the eviction policy for shared registers may free shared registers in response to determining both that (i) there are insufficient available shared registers to perform an allocation (e.g. in block 108) and that (ii) all referencing tasks that reference the particular shared registers have terminated, i.e. the counter for the entry ID that corresponds to the shared registers has a value of zero.

As shown in Figure 3, the counter is incremented (in block 309) only in the event of a cache miss and not in response to a cache hit. This is because the allocating task is only issued in the event of a cache miss. When the allocating task, that was issued in the event of a cache miss, terminates, the counter is decremented (block 504), but there is no corresponding task termination for the allocating task in the event of a cache hit because the allocating task is not issued. By incrementing the counter (in block 309) in this way, it prevents the newly made allocation from being evicted whilst the secondary program is being run.

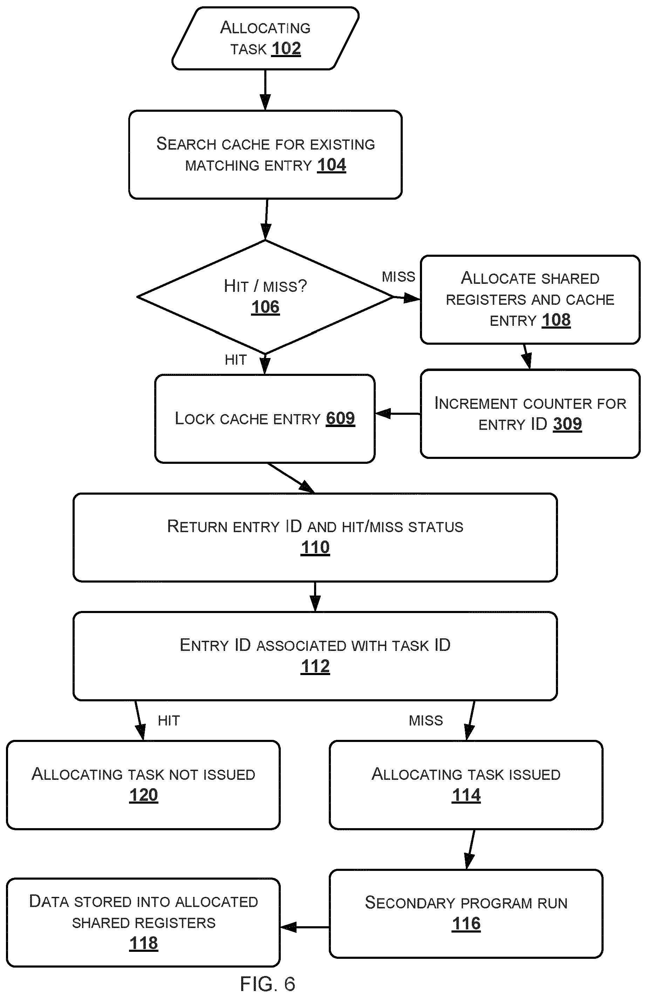

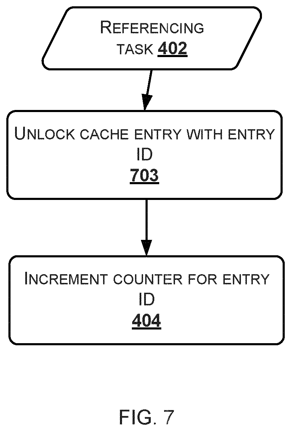

A third example method of managing shared register allocations in a GPU can be described with reference to Figures 6-7. This method is a variation on that described above with reference to Figures 3-5. As shown in Figure 6, in response to receiving an allocating task (block 102), the method proceeds in the same way as shown in Figure 3 and described above, except that in the event of a cache hit, the matching cache entry is locked (block 609) and in the event of a cache miss, the newly updated cache entry (as updated in block 108) is locked (in block 609). As shown in Figure 7, in response to receiving a referencing task (block 402), the method proceeds in the same way as in Figure 4, except that the cache entry with the entry ID that is associated with the task ID for the corresponding allocating task is unlocked (block 703). Whilst Figure 7 shows the counter being incremented (in block 404) after the cache entry is unlocked (in block 703), these two operations may be performed in any order or in parallel. In response to a task terminating, the method proceeds as shown in Figure 5 and described above. In various examples, the cache entry may be locked (in block 609) by setting a lock bit associated with, or included in, the cache entry. The cache entry may then be unlocked (in block 703) by clearing the lock bit.

The use of a lock bit, as described above, prevents the shared register allocation being evicted before a first subsequent referencing task is received. This improves the overall efficiency as it ensures that at least some of the data that is written to the shared registers by a secondary program is read before being evicted. Lock bits may be used, for example, where the eviction policy allows an allocating task associated with one master unit to evict a cache entry associated with a different master unit, as it prevents the shared register allocation for an allocating task for a first master unit being evicted as a consequence of receipt of an allocating task for a second master unit before a first subsequent referencing task associated with the first master unit is received.

Whilst the method shown in Figure 3 shows the use of a counter without locking the cache entry and Figure 6 shows the use of both the counter and the locking of the cache entry, in a further example, the locking / unlocking of the cache entry (in blocks 609 and 703) may be used without the use of the counter.

In the methods described above, the shared register allocations are only freed when there is insufficient space to create a new allocation (as described above with reference to Figure 2). In addition to this, all allocations may be freed at the end of a processing phase (e.g. where a processing phase corresponds to the time between when a master unit is started by a driver and when the processing of work from the driver is complete).

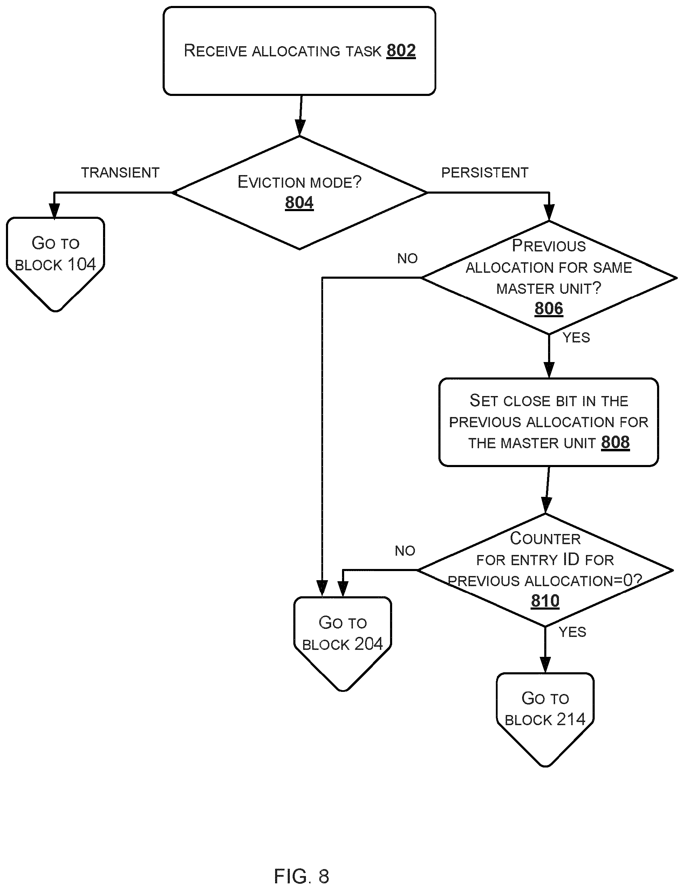

A fourth example method of managing shared register allocations in a GPU can be described with reference to Figure 8. In this example there are two eviction modes - transient and persistent - and the method operates differently for the two eviction modes. The transient eviction mode may be referred to as a deferred freeing-mode and the persistent eviction mode may be referred to as an immediate freeing-mode. Where the transient eviction mode is used, allocations are not freed when all tasks referencing that allocation complete, but instead allocations are evicted later when space is required (as described above). This means that allocations can be evicted by other master units (e.g. as the eviction policy does not include criteria related to the master unit of the current allocating task). In contrast, where the persistent eviction mode is used, shared registers are always newly allocated to the received allocating task, irrespective of what is already stored in the shared registers. In persistent eviction mode, allocations are marked as closed and when the last task referencing that allocation completes, the shared registers are freed. Allocations are closed by a subsequent allocating task for the same master unit. This prevents allocations from being evicted by other master units.

As shown in Figure 8, an allocating task is received (block 802) and the eviction mode associated with the allocating task is determined (block 804). The eviction mode may be defined for each master unit or for each cache entry. Where the eviction mode is defined for each cache entry, this may be defined based on the master unit that requested the allocation to which the cache entry relates and the corresponding eviction mode may be stored within the cache entry. Alternatively, the master unit ID may be stored within the cache entry to enable determination of the eviction mode, for example as described below.

Where the eviction mode is defined for each master unit, it may be fixed as shown below:

| Master unit | Eviction mode |
|---|---|
| Vertex master unit | Persistent |
| Domain master unit | Persistent |
| Compute master unit | Persistent |
| 2D master unit | Transient |
| Pixel master unit | Transient |
| Ray master unit | Transient |

Rather than having a fixed eviction mode for each master unit, in various examples a master unit may have a default eviction mode but some or all of them may be configurable such that they can operate in either eviction mode. A configuration register that comprises one bit per configurable master unit may be used to indicate whether the default eviction mode is used or whether the alternative eviction mode (from persistent and transient) is used. In other examples, the configuration register may comprise one bit per master unit (irrespective of whether it is configurable) and in such examples for those master units which are not configurable, the value of the bit for the master unit may be fixed in value. In an example, the default eviction modes and configurability may be specified as follows:

| Master unit | Default eviction mode | Configurable |
|---|---|---|
| Vertex master unit | Persistent | No |
| Domain master unit | Persistent | No |
| Compute master unit | Persistent | No |
| 2D master unit | Transient | Yes |
| Pixel master unit | Transient | Yes |
| Ray master unit | Transient | Yes |

As shown in the table above, those master units with a configurable eviction mode may have a default eviction mode of transient, with the configuration bit specifying where the persistent eviction mode should be used instead. Those master units that are not configurable may always use the persistent eviction mode. By having a configurable eviction mode for some or all of the master units, it provides backwards compatibility and additional flexibility.

In other examples, there may not be a default eviction mode and the value of the bit in the configuration register may define which eviction mode is used (e.g. with a one indicating the transient mode and zero indicating the persistent mode, or vice versa).

The eviction mode may, therefore, be determined (in block 804) based on the master unit associated with the allocating task (i.e. the master unit that created the allocating task). The determination (in block 804) may therefore comprise identifying the associated master unit and then determining the eviction mode for the identified master unit (e.g. by checking the bit in the configuration register that corresponds to the identified master unit).

For the transient eviction mode, the shared register allocations are managed as described above with reference to any of Figures 1, 3 and 6. As shown in Figure 8, if the eviction mode is transient, the method progresses from block 104 in any of Figures 1, 3 and 6.

For the persistent eviction mode, it is determined whether there is a previous allocation for the same master unit as is associated with the current allocating task (block 806). If there is ('Yes' in block 806), a close bit is set in the shared register allocation cache entry for that previous allocation (block 808). A check is then performed on the counter for the entry ID for the shared register allocation cache entry for that previous allocation (block 810). If the counter value is zero ('Yes' in block 810), then the method progresses from block 214 of Figure 2 (which is part of block 108 of any of Figures 1, 3 and 6) and the shared register allocation cache entry for that previous allocation is evicted and the shared register allocation is freed. If, however, the counter value is not zero ('No' in block 810), which means that there are still referencing tasks that are active (i.e. in progress), or if there is no previous allocation for the same master unit as is associated with the current allocating task ('No' in block 806), the method progresses from block 204 of Figure 2 (which is part of block 108 of any of Figures 1, 3 and 6) and a search for available shared registers is performed. If there are insufficient available shared registers ('No' in block 206), the only cache entries that will be available for eviction (and hence can be identified in block 208) are those which relate to allocations created in the transient eviction mode (because any persistent allocations for the same master unit will already have been evicted as described above). In persistent eviction mode, the hit/miss status (as returned in block 110 of Figure 1, 3 or 6) always indicates a miss.

The method of Figure 8 provides flexibility to use the transient eviction mode for those types of work (and hence those master units) where the use of the shared register allocation cache provides benefits (e.g. where a draw call is processed across multiple tiles or for ray tracing, where rays are grouped into tasks and the same shader program is run for all rays in a task) and to use persistent eviction mode for those types of work (and hence those master units) where there is little or no advantage in using the shared register allocation cache, e.g. where the draw calls are unsorted and contiguous. In persistent eviction mode, the shared register allocation cache is not searched (block 104 of Figure 1, 3 or 6 is bypassed).

The methods described above provide allocation references that are searchable, through the use of a shared register allocation cache. This means that existing, identical allocations can be reused by other tasks. Furthermore, allocations are not actively closed (thereby decoupling task termination and the freeing of shared register allocations) and instead their closure is deferred until another allocation needs the space, at which point allocations are evicted. This keeps allocations open as long as possible and increases the likelihood that allocations will be reused.

By using the methods described above, different fragment tile IDs running on the same shader core can share a shared register allocation, even if the preceding tasks have already completed. For ray tracing, the number of secondary programs that are run for incoherent task gathering is reduced.

By using the methods described above, it is possible to remove the limit on the number of tiles that can be in flight within a pipeline at any time, which is otherwise used to prevent deadlocks caused by shared register allocation, to be increased. This is because the methods described above do not allocate shared registers on a per-tile basis and if there are insufficient available shared registers, an allocation can be evicted to make space for a new allocation. As a consequence of no longer having to account for the maximum number of tiles in flight, a limit on maximum shared allocation size can be increased. In comparison, without these methods, there is a shared register allocation open for each tile ID that is currently in flight and this has to take into account the possibility that every tile has allocated the maximum size allocation in the worst case position.

Figure 9 shows a schematic diagram of a GPU 900 that implements the methods described above. The GPU 900 comprises shared registers 902, a plurality of master units 904, processing pipelines 906 and a resource management unit 908. As shown in Figure 9, the shared registers are typically inside the processing pipelines. It will be appreciated that the GPU 900 may comprise additional elements not shown in Figure 9 and although Figure 9 shows a plurality of master units, in other examples, the GPU 900 may comprise a single master unit.

The resource management unit 908 tracks resources and allocation for tasks being processed by the processing pipelines 906. The resource management unit 908 comprises a plurality of resource requestors 910 and a shared register allocation cache 912. The shared register allocation cache 912 comprises a shared register resource manager 914, eviction logic 916, counter logic 918 and cache entries 920. It will be appreciated that in examples where counters are not used, the counter logic 918 may be omitted. Whilst Figure 9 shows a single resource management unit 908, in other examples where the processing pipelines 906 are arranged in clusters, there may be a separate resource management unit 908 for each cluster. Furthermore, whilst the eviction logic 916 and counter logic 918 are shown separately from the shared register resource manager 914, in other examples, either one or both of the eviction logic 916 and counter logic 918 may be included within the shared register resource manager 914.

The methods described above are implemented by the resource management unit 908 and in particular by the shared register allocation cache 912. Most of the operations performed by the shared register allocation cache 912 are performed by the shared register resource manager 914, however the eviction logic 916 handles eviction and the counter logic 918 handles the updating of the counters associated with entry IDs.

When a resource requestor 910 requests a shared register allocation from the shared register allocation cache 912, the receipt of the allocating task by the shared register allocation cache 912 triggers it to perform the methods of any of Figures 1, 3 and 6. The shared register allocation cache 912 returns the entry ID and the hit/miss status to the requesting resource requestor 910 (in block 110). The entry ID is ultimately provided to the processing pipelines 906 to enable them to query the shared register allocation cache 912 to look up the details of the shared register allocation for a task.

The entry ID that is received by a resource requestor 910 in response to requesting a shared register allocation may be stored by the resource requestor 910 and provided in response to receiving a subsequent referencing task. Alternatively, the shared register allocation cache 912 may return the entry ID in response to receiving a referencing task. Even where the resource requestor 910 stores the entry IDs for allocating tasks, the referencing tasks may still be provided to the shared register allocation cache 912 in order that counters may be updated (e.g. as described above with reference to Figures 4 and 7).

Each of the entries in the cache entries 920 has an entry ID (e.g. as returned in block 110) and there are at least the same number of entry IDs as the number of tasks that can be executed concurrently by the processing pipelines 906 so that there is always a free entry ID available. The number of entry IDs that are available corresponds to the maximum number of open shared register allocations as each shared register allocation corresponds to an entry ID.

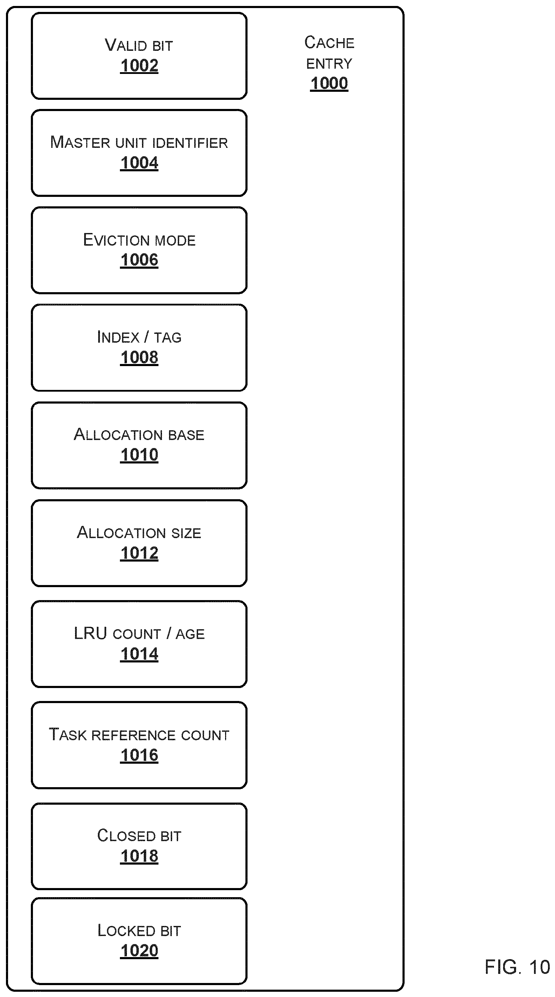

Figure 10 is a schematic diagram showing the contents of an example cache entry 1000. The cache entry 1000 has an entry ID and comprises a valid bit 1002, master unit identifier 1004, eviction mode bit 1006, cache index / tag 1008, allocation base 1010, allocation size 1012, LRU count or age 1014, task reference count 1016, closed bit 1018 and locked bit 1020. It will be appreciated that in other examples the cache entry may only comprise a subset of the elements 1002-1020 shown in Figure 10 (e.g. any one or more of the master unit identifier 1004, eviction mode bit 1006, allocation base 1010, allocation size 1012, LRU count or age 1014, closed bit 1018 and locked bit 1020 may be omitted). Where the allocation base and/or size is omitted from the cache entry, this information may be stored elsewhere (e.g. in another structure). Where the cache index / tag 1008 does not include the master unit identifier or is otherwise not unique, the cache entry 1000 may comprise at least the valid bit 1002, master unit identifier 1004 and cache index / tag 1008. The entry ID is inherent rather than being stored in the cache entry and may, for example, be an address of the structure that holds the entry.

The valid bit 1002 indicates whether the cache entry 1000 is valid or not. When a cache entry is evicted, the valid bit is set to indicate that it is no longer valid.

The master unit identifier 1004 identifies the master unit associated with the allocating task that caused the cache entry to be assigned (in blocks 108 and 218). As described below, the master unit identifier 1004 may be used in combination with the cache index / tag 1008 to uniquely identify a shared register allocation request (i.e. the allocating task) that caused the cache entry to be assigned (in blocks 108 and 218). In addition, or instead, the master unit identifier 1004 may be used when identifying an eligible cache entry for eviction (in block 208), depending upon the eviction policy used.

The eviction mode bit 1006 specifies the eviction mode bit (e.g. for the master unit identified by the identifier 1004. This element may be omitted from the cache entry 1000 where the eviction mode can be identified in another way (e.g. using a configuration register as described above or where there is a fixed relationship between master unit identifier and eviction mode).

The cache index / tag 1008 either on its own, or in combination with the master unit identifier 1004, uniquely identifies the shared register allocation request (i.e. the allocating task) that caused the cache entry to be assigned (in blocks 108 and 218). As described above, the cache index / tag 1008 may comprise the data address for the secondary program. In some examples the cache index / tag 1008 may be a combination of the data address for the secondary program and the master unit identifier.

The allocation base 1010 specifies the base memory address of the shared registers that are allocated associated with the cache entry 1000. By storing the allocation base, it enables the cache to deallocate shared registers when entries are evicted.

The allocation size 1012 specifies the size of the allocation of shared registers associated with the cache entry 1000. By storing the allocation size, it enables the use of variable allocation sizes, rather than a fixed allocation size, whilst still enabling the cache to deallocate shared registers when entries are evicted.

The LRU count or age 1014 provides data that may be used when identifying an eligible cache entry for eviction (in block 208). The data that is included in this element will depend upon the eviction policy that is used, e.g. whether given a plurality of eligible cache entries, one is identified for eviction based on least recently used (LRU) or age-based criteria (e.g. identifying the oldest), etc. The LRU count or age 1014 may be used by the eviction logic 916. Use of age-based criteria may simplify the eviction logic 916 and/or the logic that updates this cache element, whereas use of LRU has the benefit that frequently used data is less likely to be evicted.

The task reference count 1016 is the counter that is incremented in blocks 309 and 404 and decremented in block 504 and that is used to track the reference counts so that it can be determined whether an entry can be evicted or not (in block 208). The updates to the task reference count 1016 may be implemented by the counter logic 918.

The closed bit 1018 indicates when the entry is closed and is set in block 808. As described above this is used for entries which relate to the persistent eviction mode.

The locked bit 1020 indicates whether the cache entry is locked or not and is set in block 609 and cleared in block 703. As described above, this is used to prevent cross-master unit eviction between receipt of the allocating task and subsequent referencing tasks.

The cache entries 920 may be implemented as a CAM (content addressable memory) structure so that the cache indexes / tags 1008 are searchable. Not all elements 1002-1020 in a cache entry 1000 need to be searchable so in various examples, the cache entries 920 may be split into separate structures, e.g. with elements that need to be searchable in one, searchable, structure (such as a CAM) and elements that do not need to be searchable in another, non-searchable, structure. Implementing a CAM or other searchable structure requires more hardware area than a non-searchable structure (e.g. in order that all of it can be searched in a single clock cycle) and so splitting the cache entries 920 into multiple structures may reduce the overall hardware size.

The methods described above detail what happens in response to receiving an allocating task and a referencing task. For a referencing task, there will always be a cache hit, whereas for an allocating task a search is performed unless the eviction mode is set to the persistent mode. Where there are other types of task, such as housekeeping tasks, these may automatically trigger a cache miss (e.g. using the same mechanism as described above for the persistent eviction mode, but applied to a type of task irrespective of the eviction mode of the master unit that created the task). A driver may indicate to the hardware which secondary programs are housekeeping tasks and need to always run and hence need to be treated like an allocating task in a persistent eviction mode.

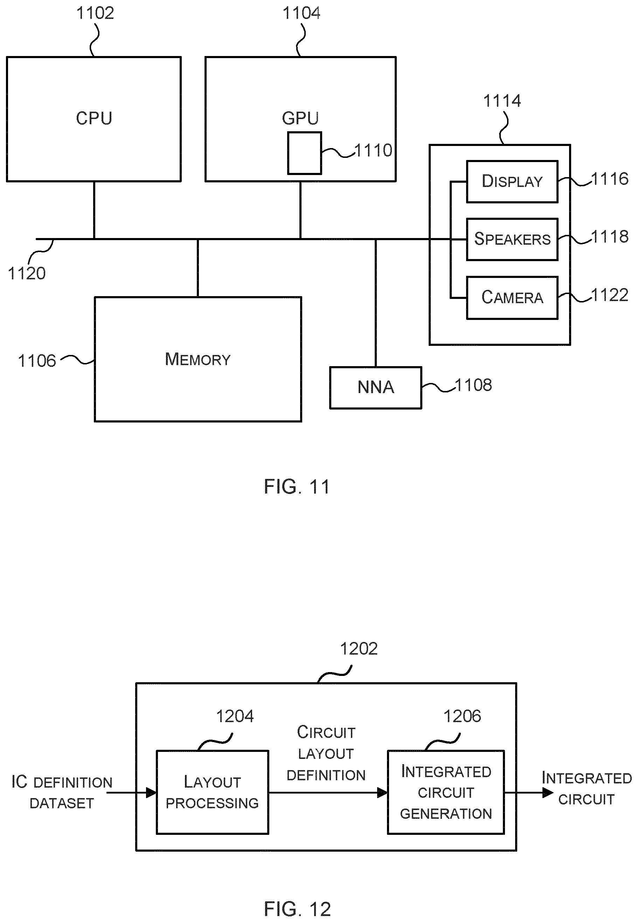

Figure 11 shows a computer system in which the graphics processing systems described herein may be implemented. The computer system comprises a CPU 1102, a GPU 1104, a memory 1106, a neural network accelerator (NNA) 1108 and other devices 1114, such as a display 1116, speakers 1118 and a camera 1122. A resource management unit 1110 (corresponding to resource management unit 908) is implemented on the GPU 1104. In other examples, one or more of the depicted components may be omitted from the system. The components of the computer system can communicate with each other via a communications bus 1120.

The GPU of Figure 9 is shown as comprising a number of functional blocks. This is schematic only and is not intended to define a strict division between different logic elements of such entities. Each functional block may be provided in any suitable manner. It is to be understood that intermediate values described herein as being formed by a GPU need not be physically generated by the GPU at any point and may merely represent logical values which conveniently describe the processing performed by the GPU between its input and output.

The GPU described herein may be embodied in hardware on an integrated circuit. The GPU described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an applicationspecific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a GPU configured to perform any of the methods described herein, or to manufacture a GPU comprising any apparatus described herein. An integrated circuit definition dataset may be, for example, an integrated circuit description.

Therefore, there may be provided a method of manufacturing, at an integrated circuit manufacturing system, a GPU as described herein. Furthermore, there may be provided an integrated circuit definition dataset that, when processed in an integrated circuit manufacturing system, causes the method of manufacturing a GPU to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a GPU will now be described with respect to Figure 12.

Figure 12 shows an example of an integrated circuit (IC) manufacturing system 1202 which is configured to manufacture a GPU as described in any of the examples herein. In particular, the IC manufacturing system 1202 comprises a layout processing system 1204 and an integrated circuit generation system 1206. The IC manufacturing system 1202 is configured to receive an IC definition dataset (e.g. defining a GPU as described in any of the examples herein), process the IC definition dataset, and generate an IC according to the IC definition dataset (e.g. which embodies a GPU as described in any of the examples herein). The processing of the IC definition dataset configures the IC manufacturing system 1202 to manufacture an integrated circuit embodying a GPU as described in any of the examples herein.

The layout processing system 1204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1204 has determined the circuit layout it may output a circuit layout definition to the IC generation system 1206. A circuit layout definition may be, for example, a circuit layout description.

The IC generation system 1206 generates an IC according to the circuit layout definition, as is known in the art. For example, the IC generation system 1206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1206 can use to form a suitable mask for use in generating an IC.

The different processes performed by the IC manufacturing system 1202 may be implemented all in one location, e.g. by one party. Alternatively, the IC manufacturing system 1202 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a GPU without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 12 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 12, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of managing shared register allocations in a GPU, the method comprising:
in response to receiving an allocating task (102), wherein the allocating task is associated with a secondary program:
searching a shared register allocation cache for a cache entry with a cache index that identifies the secondary program that is associated with the allocating task (104); and
in response to identifying a cache entry with a cache index that identifies the secondary program that is associated with the allocating task, returning an identifier of the cache entry and status information indicating a cache hit (110), wherein returning the identifier of the cache entry causes the identifier of the cache entry to be associated with the allocating task (112) and returning the status information indicating a cache hit causes the allocating task not to be issued (120).

2. The method according to claim 1, wherein searching a shared register allocation cache for a cache entry with a cache index that identifies the secondary program that is associated with the allocating task comprises:
searching a shared register allocation cache for a cache entry with a cache index with a matching data address for the secondary program.

3. The method according to claim 1, wherein the allocating task is associated with both the secondary program and a master unit identifier and wherein searching a shared register allocation cache for a cache entry with a cache index that identifies the secondary program that is associated with the allocating task comprises:
searching a shared register allocation cache for a cache entry with a cache index with both a matching data address for the secondary program and a matching master unit identifier.

4. The method according to any of the preceding claims, further comprising:
in response to determining that no cache entry has a cache index that identifies the secondary program that is associated with the allocating task, allocating shared registers to the allocating task and assigning a cache entry to record the allocation (108), and returning an identifier of the cache entry recording the allocation and status information indicating a cache miss (110), wherein returning the identifier of the cache entry causes the identifier of the cache entry to be associated with the allocating task (112) and returning the status information indicating a cache miss causes the allocating task to be issued (114).

5. The method according to claim 4, wherein allocating shared registers to the allocating task and updating a cache entry to record the allocation comprises:
searching for available shared registers for allocation to the allocating task (204);
in response to identifying available shared registers, allocating the shared registers (216) and assigning the cache entry to record the allocation (218); and
in response to not identifying available shared registers for allocation to the allocating task, identifying an eligible cache entry in the shared register allocation cache for eviction (208, 210), evicting the eligible cache entry and freeing shared registers identified in the eligible cache entry (214) before repeating the search for available shared registers for allocation to the allocating task (204).

6. The method according to claim 5, further comprising:
in response to determining that no cache entry has a cache index that identifies the secondary program that is associated with the allocating task, incrementing a counter for the identifier of the cache entry recording the allocation (309);
in response to receiving a referencing task (402), wherein the referencing task is associated with an allocating task, incrementing a counter for the identifier of the cache entry associated with the allocating task (404);
in response to an allocating task terminating (502), decrementing a counter for the identifier of the cache entry associated with the allocating task (504); and
in response to a referencing task terminating (502), wherein the referencing task is associated with an allocating task, decrementing a counter for the identifier of the cache entry associated with the allocating task (504),
wherein a cache entry in the shared register allocation cache is only eligible for eviction if the counter for the identifier of the cache entry is zero.

7. The method according to claim 5 or 6, further comprising:
locking the cache entry having the identifier that is returned (609); and
in response to receiving a referencing task (402), wherein the referencing task is associated with an allocating task, unlocking the cache entry having an identifier that is associated with the allocating task (703),
wherein a cache entry in the shared register allocation cache is only eligible for eviction if the cache entry is not locked.

8. The method according to any of the preceding claims, wherein in response to an allocating task terminating, shared resources identified in a cache entry having an identifier that is associated with the allocating task remain valid.

9. The method according to any of the preceding claims, wherein each cache entry in the shared register allocation cache has an identifier and comprises: a valid bit (1002) and a cache index (1008) and an allocation base (1010), wherein the valid bit indicates whether the cache entry is valid and the cache index comprises a data address for a secondary program.

10. The method according to claim 9, wherein each cache entry further comprises a master unit identifier.

11. The method according to claim 9 or 10, wherein each cache entry further comprises an allocation base (1010), wherein the allocation base specifies a base memory address of a shared register allocation recorded by the cache entry.

12. A method of operating a GPU, the method comprising:
receiving an allocating task (802);
determining an eviction mode associated with the allocating task (804);
in response to determining that the eviction mode associated with the allocating task is a first eviction mode, managing shared register allocations according to the method of any of claims 1-11; and
in response to determining that the eviction mode associated with the allocating task is a second eviction mode:
setting a closed bit in an entry in the shared register allocation cache for any previous allocation for a master unit associated with the allocating task (808);
in response to determining that a counter for the identifier for the entry in the shared register allocation cache for any previous allocation for a master unit associated with the allocating task is zero (810), evicting the eligible cache entry and freeing shared registers identified in the eligible cache entry (214);
searching for available shared registers for allocation to the allocating task (204);
in response to not identifying available shared registers for allocation to the allocating task, identifying an eligible cache entry in the shared register allocation cache for eviction (208, 210), evicting the eligible cache entry and freeing shared registers identified in the eligible cache entry (214) before repeating the search for available shared registers for allocation to the allocating task (204);
in response to identifying available shared registers, allocating the shared registers (216) and assigning the cache entry to record the allocation (218); and
returning an identifier of the cache entry recording the allocation and status information indicating a cache miss (110), wherein returning the identifier of the cache entry causes the identifier of the cache entry to be associated with the allocating task (112) and returning the status information indicating a cache miss causes the allocating task to be issued (114).

13. A shared register allocation cache (912) for a GPU comprising a shared register resource manager (912) and a plurality of cache entries (920), wherein the shared register resource manager (912) is arranged, in response to receiving an allocating task (102), to:
search for a cache entry with a cache index that identifies a secondary program that is associated with the allocating task (104); and
in response to identifying a cache entry with a cache index that identifies the secondary program that is associated with the allocating task, return an identifier of the cache entry and status information indicating a cache hit (110), wherein returning the identifier of the cache entry causes the identifier of the cache entry to be associated with the allocating task (112) and returning the status information indicating a cache hit causes the allocating task not to be issued (120).

14. A GPU comprising the shared register allocation cache according to claim 13 or configured to perform the method of any of claims 1-12.

15. An integrated circuit manufacturing system comprising:
a non-transitory computer readable storage medium having stored thereon a computer readable description of a GPU as claimed in claim 14;
a layout processing system configured to process the computer readable description so as to generate a circuit layout description of an integrated circuit embodying the GPU; and
an integrated circuit generation system configured to manufacture the GPU according to the circuit layout description.

## Patentansprüche

1. Verfahren für ein Verwalten gemeinsam genutzter Registerzuweisungen in einer GPU, das Verfahren umfassend:
in Reaktion auf ein Empfangen einer Zuweisungsaufgabe (102), wobei die Zuweisungsaufgabe einem sekundären Programm zugeordnet ist:
Durchsuchen eines Caches für gemeinsam genutzte Registerzuweisungen nach einem Cache-Eintrag mit einem Cache-Index, der das sekundäre Programm identifiziert, das der Zuweisungsaufgabe zugeordnet ist (104); und
in Reaktion auf ein Identifizieren eines Cache-Eintrags mit einem Cache-Index, der das sekundäre Programm identifiziert, das der Zuweisungsaufgabe zugeordnet ist, Zurückgeben einer Kennung des Cache-Eintrags und von Statusinformationen, die auf einen Cache-Treffer hinweisen (110), wobei das Zurückgeben der Kennung des Cache-Eintrags bewirkt, dass die Kennung des Cache-Eintrags der Zuweisungsaufgabe zugeordnet wird (112) und das Zurückgeben der Statusinformationen, die auf einen Cache-Treffer hinweisen, bewirkt, dass die Zuweisungsaufgabe nicht ausgegeben wird (120).

2. Verfahren nach Anspruch 1, wobei das Durchsuchen eines Caches für gemeinsam genutzte Registerzuweisungen nach einem Cache-Eintrag mit einem Cache-Index, der das sekundäre Programm identifiziert, das der Zuweisungsaufgabe zugeordnet ist, umfasst:
Durchsuchen eines Caches für gemeinsam genutzte Registerzuweisungen nach einem Cache-Eintrag mit einem Cache-Index mit einer übereinstimmenden Datenadresse für das sekundäre Programm.

3. Verfahren nach Anspruch 1, wobei die Zuweisungsaufgabe sowohl dem sekundären Programm als auch einer Haupteinheitskennung zugeordnet ist und wobei das Durchsuchen eines Caches für gemeinsam genutzte Registerzuweisungen nach einem Cache-Eintrag mit einem Cache-Index, der das sekundäre Programm identifiziert, das der Zuweisungsaufgabe zugeordnet ist, umfasst:
Durchsuchen eines Caches für gemeinsam genutzte Registerzuweisungen nach einem Cache-Eintrag mit einem Cache-Index mit sowohl einer übereinstimmenden Datenadresse für das sekundäre Programm als auch einer übereinstimmenden Haupteinheitskennung.

4. Verfahren nach einem der vorstehenden Ansprüche, ferner umfassend:
in Reaktion auf ein Bestimmen, dass kein Cache-Eintrag einen Cache-Index hat, der das sekundäre Programm identifiziert, das der Zuweisungsaufgabe zugeordnet ist, Zuweisen von gemeinsam genutzten Registern zu der Zuweisungsaufgabe und Zuweisen eines Cache-Eintrags für ein Aufzeichnen der Zuweisung (108), und Zurückgeben einer Kennung des Cache-Eintrags, der die Zuweisung aufzeichnet, und von Statusinformationen, die auf einen Cache-Misserfolg hinweisen (110), wobei das Zurückgeben der Kennung des Cache-Eintrags bewirkt, dass die Kennung des Cache-Eintrags der Zuweisungsaufgabe zugeordnet wird (112) und das Zurückgeben der Statusinformationen, die auf einen Cache-Misserfolg hinweisen, bewirkt, dass die Zuweisungsaufgabe ausgegeben wird (114).

5. Verfahren nach Anspruch 4, wobei das Zuweisen gemeinsam genutzter Registern zu der Zuweisungsaufgabe und das Aktualisieren eines Cache-Eintrags für ein Aufzeichnen der Zuweisung umfasst:
Suchen nach verfügbaren gemeinsam genutzten Registern für ein Zuweisen zu der Zuweisungsaufgabe (204);
in Reaktion auf ein Identifizieren verfügbarer gemeinsam genutzter Register, Zuweisen der gemeinsam genutzten Register (216) und Zuweisen des Cache-Eintrags für ein Aufzeichnen der Zuweisung (218); und
in Reaktion auf kein Identifizieren verfügbarer gemeinsam genutzter Register für ein Zuweisen zu der Zuweisungsaufgabe, Identifizieren eines geeigneten Cache-Eintrags in dem Cache für gemeinsam genutzter Register für ein Räumen (208, 210), Räumen des geeigneten Cache-Eintrags und Freigeben gemeinsam genutzter Register, die in dem geeigneten Cache-Eintrag identifiziert wurden (214), vor einer Wiederholung der Suche nach verfügbaren gemeinsam genutzten Registern für ein Zuweisen zu der Zuweisungsaufgabe (204) .

6. Verfahren nach Anspruch 5, ferner umfassend:
in Reaktion auf ein Bestimmen, dass kein Cache-Eintrag einen Cache-Index hat, der das sekundäre Programm identifiziert, das der Zuweisungsaufgabe zugeordnet ist, Inkrementieren eines Zählers für die Kennung des Cache-Eintrags, der die Zuweisung aufzeichnet (309) ;
in Reaktion auf ein Empfangen einer Referenzierungsaufgabe (402), wobei die Referenzierungsaufgabe einer Zuweisungsaufgabe zugeordnet ist, Inkrementieren eines Zählers für die Kennung des der Zuweisungsaufgabe zugeordneten Cache-Eintrags (404);
in Reaktion auf ein Beenden einer Zuweisungsaufgabe (502), Dekrementieren eines Zählers für die Kennung des der Zuweisungsaufgabe zugeordneten Cache-Eintrags (504); und
in Reaktion auf ein Beenden einer Referenzierungsaufgabe (502), wobei die Referenzierungsaufgabe einer Zuweisungsaufgabe zugeordnet ist, Dekrementieren eines Zählers für die Kennung des der Zuweisungsaufgabe zugeordneten Cache-Eintrags (504),
wobei ein Cache-Eintrag in dem Cache für gemeinsam genutzte Registerzuweisungen nur dann für ein Räumen in Frage kommt, wenn der Zähler für die Kennung des Cache-Eintrags Null ist.

7. Verfahren nach Anspruch 5 oder 6, ferner umfassend:
Sperren des Cache-Eintrags mit der zurückgegebenen Kennung (609); und
in Reaktion auf ein Empfangen einer Referenzierungsaufgabe (402), wobei die Referenzierungsaufgabe einer Zuweisungsaufgabe zugeordnet ist, Entsperren des Cache-Eintrags mit einer Kennung, die der Zuweisungsaufgabe zugeordnet ist (703),
wobei ein Cache-Eintrag in dem Cache für gemeinsam genutzte Registerzuweisungen nur dann für ein Räumen in Frage kommt, wenn der Cache-Eintrag nicht gesperrt ist.

8. Verfahren nach einem der vorhergehenden Ansprüche, wobei in Reaktion auf ein Beenden der Zuweisungsaufgabe, gemeinsam genutzte Ressourcen, die in einem Cache-Eintrag mit einer der Zuweisungsaufgabe zugeordneten Kennung identifiziert wurden, gültig bleiben.

9. Verfahren nach einem der vorhergehenden Ansprüche, wobei jeder Cache-Eintrag in dem Cache für gemeinsam genutzte Registerzuweisungen eine Kennung hat und umfasst: ein gültiges Bit (1002) und einen Cache-Index (1008) und eine Zuweisungsbasis (1010), wobei das gültige Bit darauf hinweist, ob der Cache-Eintrag gültig ist und der Cache-Index eine Datenadresse für ein sekundäres Programm umfasst.

10. Verfahren nach Anspruch 9, wobei jeder Cache-Eintrag ferner eine Haupteinheitskennung umfasst.

11. Verfahren nach Anspruch 9 oder 10, wobei jeder Cache-Eintrag ferner eine Zuordnungsbasis (1010) umfasst, wobei die Zuordnungsbasis eine Basisspeicheradresse einer durch den Cache-Eintrag aufgezeichneten gemeinsam genutzten Registerzuordnung angibt.

12. Verfahren für ein Betreiben einer GPU, das Verfahren umfassend:
Empfangen einer Zuweisungsaufgabe (802);
Bestimmen eines der Zuweisungsaufgabe zugeordneten Räumungsmodus (804);
in Reaktion auf ein Bestimmen, dass der Räumungsmodus, der der Zuweisungsaufgabe zugeordnet ist, ein erster Räumungsmodus ist, Verwalten von gemeinsam genutzten Registerzuweisungen gemäß dem Verfahren nach einem der Ansprüche 1-11; und
in Reaktion auf ein Bestimmen, dass der Räumungsmodus, der der Zuweisungsaufgabe zugeordnet ist, ein zweiter Räumungsmodus ist:
Setzen eines geschlossenen Bits in einem Eintrag in dem Cache für gemeinsam genutzte Registerzuweisungen für jede frühere Zuweisung für eine der Zuweisungsaufgabe zugeordnete Haupteinheit (808);
in Reaktion auf ein Bestimmen, dass ein Zähler für die Kennung für den Eintrag in dem Cache für gemeinsam genutzte Registerzuweisungen für jede frühere Zuweisung für eine der Zuweisungsaufgabe zugeordnete Haupteinheit Null ist (810), Räumen des in Frage kommenden Cache-Eintrags und Freigeben gemeinsam genutzter Register, die in dem in Frage kommenden Cache-Eintrag identifiziert wurden (214);
Suchen nach verfügbaren gemeinsam genutzten Registern für ein Zuweisen zu der Zuweisungsaufgabe (204);
in Reaktion auf kein Identifizieren verfügbarer gemeinsam genutzter Register für ein Zuweisen zu der Zuweisungsaufgabe, Identifizieren eines geeigneten Cache-Eintrags in dem Cache für gemeinsam genutzte Registerzuweisungen für ein Räumen (208, 210), Räumen des geeigneten Cache-Eintrags und Freigeben gemeinsam genutzter Register, die in dem geeigneten Cache-Eintrag identifiziert wurden (214), vor einer Wiederholung der Suche nach verfügbaren gemeinsam genutzten Registern für ein Zuweisen zu der Zuweisungsaufgabe (204).
in Reaktion auf ein Identifizieren verfügbarer gemeinsam genutzter Register, Zuweisen der gemeinsam genutzten Register (216) und Zuweisen des Cache-Eintrags für ein Aufzeichnen der Zuweisung (218); und
Zurückgeben einer Kennung des Cache-Eintrags, der die Zuweisung und die Statusinformationen, die auf einen Cache-Fehlschlag hinweisen, aufzeichnet (110), wobei das Zurückgeben der Kennung des Cache-Eintrags bewirkt, dass die Kennung des Cache-Eintrags der Zuweisungsaufgabe zugeordnet wird (112) und das Zurückgeben der Statusinformationen, die auf einen Cache-Fehlschlag hinweisen, bewirkt, dass die Zuweisungsaufgabe ausgegeben wird (114).

13. Cache für gemeinsam genutzte Registerzuweisungen (912) für eine GPU, umfassend einen gemeinsam genutzten Registeressourcenmanager (912) und eine Mehrzahl von Cache-Einträgen (920), wobei der gemeinsam genutzte Registerressourcenmanager (912) angeordnet ist, in Reaktion auf ein Empfangen einer Zuweisungsaufgabe (102), für ein:
Suchen nach einem Cache-Eintrag mit einem Cache-Index, der ein sekundäres Programm identifiziert, das der Zuweisungsaufgabe zugeordnet ist (104); und
in Reaktion auf ein Identifizieren eines Cache-Eintrags mit einem Cache-Index, der das sekundäre Programm identifiziert, das der Zuweisungsaufgabe zugeordnet ist, Zurückgeben einer Kennung des Cache-Eintrags und Statusinformationen, die auf einen Cache-Treffer hinweisen (110), wobei das Zurückgeben der Kennung des Cache-Eintrags bewirkt, dass die Kennung des Cache-Eintrags der Zuweisungsaufgabe zugeordnet wird (112), und das Zurückgeben der Statusinformationen, die auf einen Cache-Treffer hinweisen, bewirkt, dass die Zuweisungsaufgabe nicht ausgegeben wird (120).

14. GPU, umfassend den Cache für gemeinsam genutzte Registerzuweisungen nach Anspruch 13 oder eingerichtet für ein Durchführen des Verfahrens nach einem der Ansprüche 1-12.

15. Herstellungssystem für integrierte Schaltungen, umfassend:
ein nichtflüchtiges, computerlesbares Speichermedium mit einer darauf gespeicherten computerlesbaren Beschreibung einer GPU nach Anspruch 14;
ein Layoutverarbeitungssystem, eingerichtet für ein Verarbeiten der computerlesbare Beschreibung, um eine Schaltungslayoutbeschreibung einer integrierten Schaltung zu erzeugen, die die GPU verkörpert; und
ein Herstellungssystem für integrierte Schaltungen, eingerichtet für ein Herstellen der GPU gemäß der Schaltungslayoutbeschreibung.

## Revendications

1. Procédé de gestion d'attributions de registres partagés dans un processeur graphique, le procédé comprenant :
en réponse à la réception d'une tâche d'attribution (102), dans lequel la tâche d'attribution est associée à un programme secondaire :
la recherche d'une mémoire cache d'attribution de registre partagé pour une entrée de cache avec un index de cache qui identifie le programme secondaire qui est associé à la tâche d'attribution (104) ; et
en réponse à l'identification d'une entrée de cache avec un index de cache qui identifie le programme secondaire qui est associé à la tâche d'attribution, le renvoi d'un identifiant de l'entrée de cache et d'informations d'état indiquant un succès de cache (110), dans lequel le renvoi de l'identifiant de l'entrée de cache amène l'identifiant de l'entrée de cache à être associé à la tâche d'attribution (112) et le renvoi des informations d'état indiquant un succès de cache amène la tâche d'attribution à ne pas être émise (120) .

2. Procédé selon la revendication 1, dans lequel la recherche d'une mémoire cache d'attribution de registre partagé pour une entrée de cache avec un index de cache qui identifie le programme secondaire qui est associé à la tâche d'attribution comprend :
la recherche d'une mémoire cache d'attribution de registre partagé pour une entrée de cache avec un index de cache ayant une adresse de données concordante pour le programme secondaire.

3. Procédé selon la revendication 1, dans lequel la tâche d'attribution est associée à la fois au programme secondaire et à un identifiant d'unité maître et dans lequel la recherche d'une mémoire cache d'attribution de registre partagé pour une entrée de cache avec un index de cache qui identifie le programme secondaire qui est associé à la tâche d'attribution comprend :
la recherche d'une mémoire cache d'attribution de registre partagé pour une entrée de cache avec un index de cache ayant à la fois une adresse de données concordante pour le programme secondaire et un identifiant d'unité maître concordant.

4. Procédé selon l'une quelconque des revendications précédentes, comprenant en outre :
en réponse à la détermination qu'aucune entrée de cache n'a un index de cache qui identifie le programme secondaire qui est associé à la tâche d'attribution, l'attribution de registres partagés à la tâche d'attribution et l'affectation d'une entrée de cache pour enregistrer l'attribution (108), et le renvoi d'un identifiant de l'entrée de cache enregistrant l'attribution et les informations d'état indiquant un défaut de cache (110), dans lequel le renvoi de l'identifiant de l'entrée de cache amène l'association de l'identifiant de l'entrée de cache à la tâche d'attribution (112) et le renvoi des informations d'état indiquant un défaut de cache amène l'émission de la tâche d'attribution (114).

5. Procédé selon la revendication 4, dans lequel l'attribution de registres partagés à la tâche d'attribution et la mise à jour d'une entrée de cache pour enregistrer l'attribution comprennent :
la recherche de registres partagés disponibles pour l'attribution à la tâche d'attribution (204) ;
en réponse à l'identification de registres partagés disponibles, l'attribution des registres partagés (216) et l'affectation de l'entrée de cache pour enregistrer l'attribution (218) ; et
en réponse à la non-identification de registres partagés disponibles pour l'attribution à la tâche d'attribution, l'identification d'une entrée de cache éligible dans la mémoire cache d'attribution de registres partagés pour l'éviction (208, 210), l'éviction de l'entrée de cache éligible et la libération des registres partagés identifiés dans l'entrée de cache éligible (214) avant la répétition de la recherche des registres partagés disponibles pour l'attribution à la tâche d'attribution (204).

6. Procédé selon la revendication 5, comprenant en outre :
en réponse à la détermination qu'aucune entrée de cache n'a un index de cache qui identifie le programme secondaire qui est associé à la tâche d'attribution, l'incrémentation d'un compteur pour l'identifiant de l'entrée de cache enregistrant l'attribution (309) ;
en réponse à la réception d'une tâche de référencement (402), dans lequel la tâche de référencement est associée à une tâche d'attribution, l'incrémentation d'un compteur pour l'identifiant de l'entrée de cache associée à la tâche d'attribution (404) ;
en réponse à une tâche d'attribution se terminant (502), la décrémentation d'un compteur pour l'identifiant de l'entrée de cache associée à la tâche d'attribution (504) ; et
en réponse à une tâche de référencement se terminant (502), dans lequel la tâche de référencement est associée à une tâche d'attribution, la décrémentation d'un compteur pour l'identifiant de l'entrée de cache associée à la tâche d'attribution (504), dans lequel une entrée de cache dans la mémoire cache d'attribution de registre partagé est uniquement éligible à l'éviction si le compteur pour l'identifiant de l'entrée de cache est de zéro.

7. Procédé selon la revendication 5 ou 6, comprenant en outre :
le verrouillage de l'entrée de cache ayant l'identifiant qui est renvoyé (609) ; et
en réponse à la réception d'une tâche de référencement (402), dans lequel la tâche de référencement est associée à une tâche d'attribution, le déverrouillage de l'entrée de cache ayant un identifiant qui est associé à la tâche d'attribution (703),
dans lequel une entrée de cache dans la mémoire cache d'attribution de registre partagé est uniquement éligible à l'éviction si l'entrée de cache n'est pas verrouillée.

8. Procédé selon l'une quelconque des revendications précédentes, dans lequel, en réponse à une tâche d'attribution se terminant, des ressources partagées identifiées dans une entrée de cache ayant un identifiant qui est associé à la tâche d'attribution restent valides.

9. Procédé selon l'une quelconque des revendications précédentes, dans lequel chaque entrée de cache dans la mémoire cache d'attribution de registre partagé a un identifiant et comprend : un bit valide (1002) et un index de cache (1008) et une base d'attribution (1010), dans lequel le bit valide indique si l'entrée de cache est valide et l'index de cache comprend une adresse de données pour un programme secondaire.

10. Procédé selon la revendication 9, dans lequel chaque entrée de cache comprend en outre un identifiant d'unité maître.

11. Procédé selon la revendication 9 ou 10, dans lequel chaque entrée de cache comprend en outre une base d'attribution (1010), dans lequel la base d'attribution spécifie une adresse de mémoire de base d'une attribution de registre partagé enregistrée par l'entrée de cache.

12. Procédé de fonctionnement d'un processeur graphique, le procédé comprenant :
la réception d'une tâche d'attribution (802) ;
la détermination d'un mode d'éviction associé à la tâche d'attribution (804) ;
en réponse à la détermination que le mode d'éviction associé à la tâche d'attribution est un premier mode d'éviction, la gestion des attributions de registre partagé conformément au procédé selon l'une quelconque des revendications 1 à 11 ; et
en réponse à la détermination que le mode d'éviction associé à la tâche d'attribution est un deuxième mode d'éviction :
la définition d'un bit fermé dans une entrée dans la mémoire cache d'attribution de registre partagé pour toute attribution précédente pour une unité maître associée à la tâche d'attribution (808) ;
en réponse à la détermination qu'un compteur pour l'identifiant pour l'entrée dans la mémoire cache d'attribution de registre partagé pour toute attribution précédente pour une unité maître associée à la tâche d'attribution est de zéro (810), l'éviction de l'entrée de cache éligible et la libération des registres partagés identifiés dans l'entrée de cache éligible (214) ;
la recherche de registres partagés disponibles pour l'attribution à la tâche d'attribution (204) ;
en réponse à la non-identification de registres partagés disponibles pour l'attribution à la tâche d'attribution, l'identification d'une entrée de cache éligible dans la mémoire cache d'attribution de registres partagés pour l'éviction (208, 210), l'éviction de l'entrée de cache éligible et la libération des registres partagés identifiés dans l'entrée de cache éligible (214) avant la répétition de la recherche des registres partagés disponibles pour l'attribution à la tâche d'attribution (204) ;
en réponse à l'identification de registres partagés disponibles, l'attribution des registres partagés (216) et l'affectation de l'entrée de cache pour enregistrer l'attribution (218) ; et
le renvoi d'un identifiant de l'entrée de cache enregistrant l'attribution et les informations d'état indiquant un défaut de cache (110), dans lequel le renvoi de l'identifiant de l'entrée de cache amène l'identifiant de l'entrée de cache à être associé à la tâche d'attribution (112) et le renvoi des informations d'état indiquant un défaut de cache amène la tâche d'attribution à être émise (114).

13. Mémoire cache d'attribution de registre partagé (912) pour un processeur graphique comprenant un gestionnaire de ressources de registres partagés (912) et une pluralité d'entrées de cache (920), dans laquelle le gestionnaire de ressources de registres partagés (912) est agencé, en réponse à la réception d'une tâche d'attribution (102), pour :
rechercher une entrée de cache avec un index de cache qui identifie un programme secondaire qui est associé à la tâche d'attribution (104) ; et
en réponse à l'identification d'une entrée de cache avec un index de cache qui identifie le programme secondaire qui est associé à la tâche d'attribution, renvoyer un identifiant de l'entrée de cache et d'informations d'état indiquant un succès de cache (110), dans lequel le renvoi de l'identifiant de l'entrée de cache amène l'identifiant de l'entrée de cache à être associé à la tâche d'attribution (112) et le renvoi des informations d'état indiquant un succès de cache amène la tâche d'attribution à ne pas être émise (120).

14. Processeur graphique comprenant la mémoire cache d'attribution de registre partagé selon la revendication 13 ou configuré pour réaliser le procédé selon l'une quelconque des revendications 1 à 12.

15. Système de fabrication de circuit intégré comprenant :
un support de stockage non transitoire lisible par ordinateur sur lequel est stockée une description lisible par ordinateur d'un processeur graphique selon la revendication 14 ;
un système de traitement de disposition configuré pour traiter la description lisible par ordinateur de manière à générer une description de disposition de circuit d'un circuit intégré incorporant le processeur graphique ; et
un système de génération de circuit intégré configuré pour fabriquer le processeur graphique selon la description de disposition de circuit.
